# FASCICULE DE BREVET EUROPEEN

(11) **EP 1 577 505 B1**
(45) Date de publication et mention de la délivrance du brevet: **12.11.2014**
(21) Numéro de dépôt: 05102022.0
(22) Date de dépôt: 15.03.2005
(51) Int. Cl.: F01D 25/24, F23R 3/60, F02C 3/14, F23R 3/00, F02K 1/82, F23R 3/28

(54) **Pontet de positionnement et son utilisation au canal support de tuyere d'un turbopropulseur**
Haltevorrichtung für Turboproptriebwerkdüse
Support bracket for turboprop engine nozzle

(30) Priorité: 15.03.2004 FR 0450518
(43) Date de publication de la demande: 21.09.2005
(73) Titulaire: SNECMA, 75015 Paris (FR)
(72) Inventeur: Mandet, Emmanuel Christophe, 77830, Echouboulains (FR); Roche, Jacques-A, 91090, Lisses (FR); Salperwyck, Laurent Claude Patrick, 77650, Lizines (FR)
(74) Mandataire: Ahner, Philippe

(56) Documents cités:
- EP-A1- 0 397 566
- US-A- 2 962 053
- US-A- 4 848 089
- US-A1- 2002 108 378

## Description

### Domaine de l'invention

L'invention concerne le domaine des turbopropulseurs utilisés en aéronautique, et plus précisément le positionnement relatif de la chemise de protection thermique et du canal support de tuyère d'un propulseur, en particulier d'un propulseur à flux secondaire de refroidissement.

### Art antérieur et problème posé

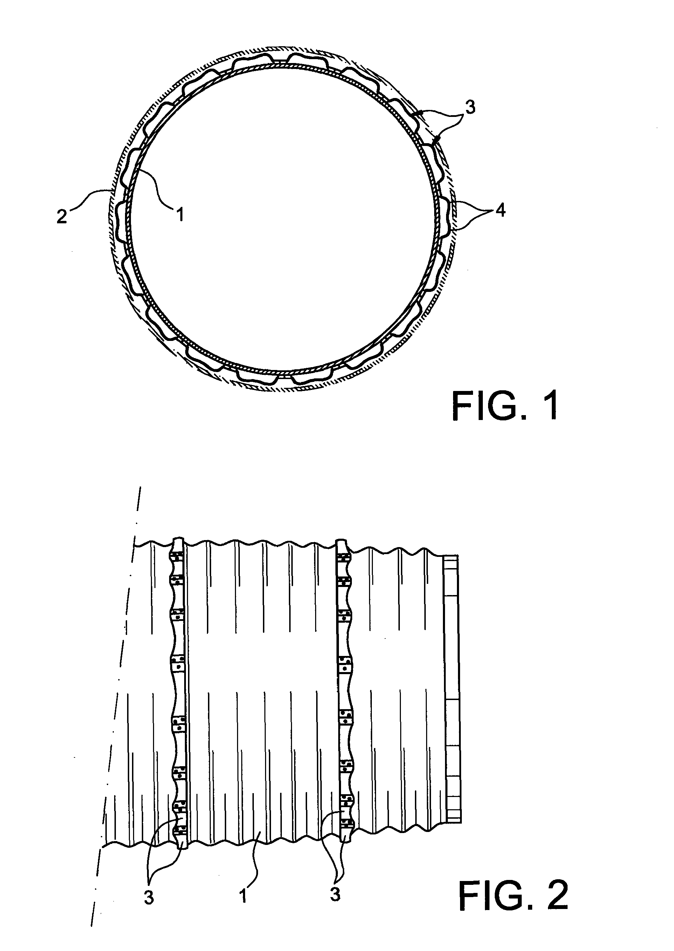

Dans les turbopropulseurs de type militaire, qui utilise un flux secondaire de refroidissement, il est nécessaire de pouvoir positionner constamment la chemise de protection thermique au niveau de la tuyère par rapport au canal support de tuyère. En d'autres termes, on se préoccupe du centrage de la chemise de protection thermique. A cet effet, on utilise des pontets répartis sur toute la circonférence de l'enveloppe interne, c'est-à-dire la chemise de protection thermique. On peut d'ailleurs se référer à la figure 1 sans tenir compte de la forme des pontets 3 placés entre la chemise de protection thermique 1 et l'enveloppe du canal support de tuyère 2. De plus, ces pontets doivent également assurer une fonction de diaphragme vis-à-vis du flux secondaire circulant entre la protection interne, c'est-à-dire la chemise de protection thermique et l'enveloppe externe, c'est-à-dire le canal support de tuyère. Enfin, ils peuvent contribuer à empêcher les modes de résonance de la chemise de protection thermique en dessous d'une certaine fréquence.

De manière générale, les pontets sont rivetés sur la chemise de protection thermique, un soudage par point entraînant quelquefois des arrachements. Le principal inconvénient de cette solution est le manque de souplesse. En effet, sous une charge de compression due à une différence de dilatation thermique et un différentiel de pression entre le canal support de tuyère et la chemise de protection thermique, les montants des pontets sont rapidement arc-boutés et la contrainte maximale admissible est vite atteinte. Les risques associés à ce manque de souplesse sont, entre autres, le report de la déformation sur le canal support de tuyère et la chemise de protection thermique. Or, ces pièces sont complexes, onéreuses et susceptibles de provoquer des dysfonctionnements du turbopropulseur, si elles sont détériorées. On pense en particulier à l'implosion de la chemise de protection thermique qui entraîne une obstruction partielle du flux primaire moteur, des emboutissages locaux du canal support de tuyère et des ruptures associées.

Une solution composée de pontets de très faible hauteur fixée sur un diaphragme circulaire riveté sur la chemise est plus souple de fonctionnement. Par contre, le gradient thermique entre l'amont et l'aval du diaphragme ne donne pas satisfaction vis-à-vis de la structure du moteur. En effet, il a été constaté une fatigue thermique provoquant des criques longitudinales, puis circonférentielles jusqu'à l'obtention d'une perte de portions de secteur.

Des dispositifs de positionnement de l'art antérieur sont divulgués dans les documents US 2 962 053, EP 0 397 566 et US 2002/0108378.

Compte tenu de ces différentes techniques et remarques, le but de l'invention est de remédier aux inconvénients susmentionnés et de proposer un autre type de pontet, sachant que les pontets doivent assurer trois fonctions principales. La première consiste à toucher idéalement au plus tôt le canal support de tuyère, afin de centrer la chemise de protection thermique. On note qu'une augmentation du nombre d'appuis permet d'accroître la capacité en flambage de la chemise de protection thermique. Une deuxième fonction est de permettre de calibrer au mieux les sections de diaphragmes dans le flux secondaire. Enfin, la troisième est l'absorption des dilatations différentielles et multidirectionnelles importantes à ce niveau du turbopropulseur.

### Résumé de l'invention

A cet effet, un premier objet de l'invention conformément à la revendication 1 est un pontet de positionnement de deux pièces l'une par rapport à l'autre, ces deux pièces étant susceptibles de subir des variations concernant leur position relative, le pontet étant constitué d'une lame métallique comprenant principalement :
- deux pattes constituées par les deux extrémités de la lame, devant être en contact avec une première des deux pièces ;
- une partie centrale cambrée reliant les deux pattes, et comprenant au moins une zone sommitale de la cambrure constituant au moins une zone de contact avec la deuxième des deux pièces.

Selon l'invention, la partie centrale cambrée présente une cambrure centrale inversée, définissant ainsi deux zones sommitales constituant deux points de contact avec la deuxième des deux pièces.

Dans la réalisation principale de l'invention, dans le but de permettre certaines dilatations circonférentielles, une seule des deux pattes est fixée sur la première des deux pièces, l'autre patte n'étant en contact avec celle-ci, permettant ainsi d'avoir un mouvement tangentiel relatif par rapport à la première des deux pièces.

Ce montage est réalisé au moyen d'une lumière dans la deuxième patte dans le sens longitudinal de la lame constituant le pontet.

Dans ce cas, il est avantageux de compléter ce montage au moyen d'un pion de guidage en forme de T, solidaire de la première pièce et dont le pied du T est placé dans la lumière.

Une réalisation préférentielle consiste également à doter la jonction entre la partie centrale cambrée et les pattes d'un rayon de courbure faible.

Un deuxième objet principal de l'invention est un dispositif de positionnement et d'adaptation aux dilatations différentielles entre la chemise de protection thermique et l'enveloppe du canal support de tuyère d'un turboréacteur.

Selon l'invention, on utilise des pontets comprenant les caractéristiques précédemment énoncées et fixés sur la chemise de protection thermique.

### Liste des figures

L'invention et ses différentes caractéristiques techniques seront mieux comprises à la lecture de la description suivante, qui est accompagnée de quatre figures représentant respectivement :
- figure 1, le positionnement circonférentielle dans l'utilisation des pontets selon l'invention pour un turbopropulseur ;
- figure 2, le positionnement longitudinal des pontets selon l'invention dans cette même utilisation pour un turbopropulseur ;
- figure 3, en coupe, un pontet selon l'invention positionné pour son utilisation dans un turbopropulseur ; et
- figure 4, en vue cavalière, un pontet selon l'invention.

### Description détaillée d'une réalisation de l'invention

La figure 1 montre l'implantation circonférentielle des pontets 3 selon l'invention sur une chemise de protection thermique 1 d'une tuyère de turbopropulseur. Les deux traits fins interrompus 2 symbolisent les positionnements extrêmes de l'enveloppe du canal support de tuyère. On constate que l'espace entre la chemise de protection thermique 1 et l'enveloppe du canal de flux secondaire 2 est de l'ordre de 10 mm. En conséquence, les pontets 3 sont relativement plats. Par contre, ils doivent pouvoir supporter un écrasement de l'ordre de 15 à 25 % de la hauteur, tout en assurant une tenue mécanique suffisante.

La figure 2 montre le positionnement longitudinal des pontets sur l'enveloppe de protection thermique 1 de la tuyère d'un turbopropulseur. Il est ainsi possible et facilement réalisable de mettre plusieurs rangées ou anneaux de pontets 3 sur toute la longueur de cette pièce pour assurer le positionnement de l'enveloppe du canal de flux secondaire sur toute sa longueur.

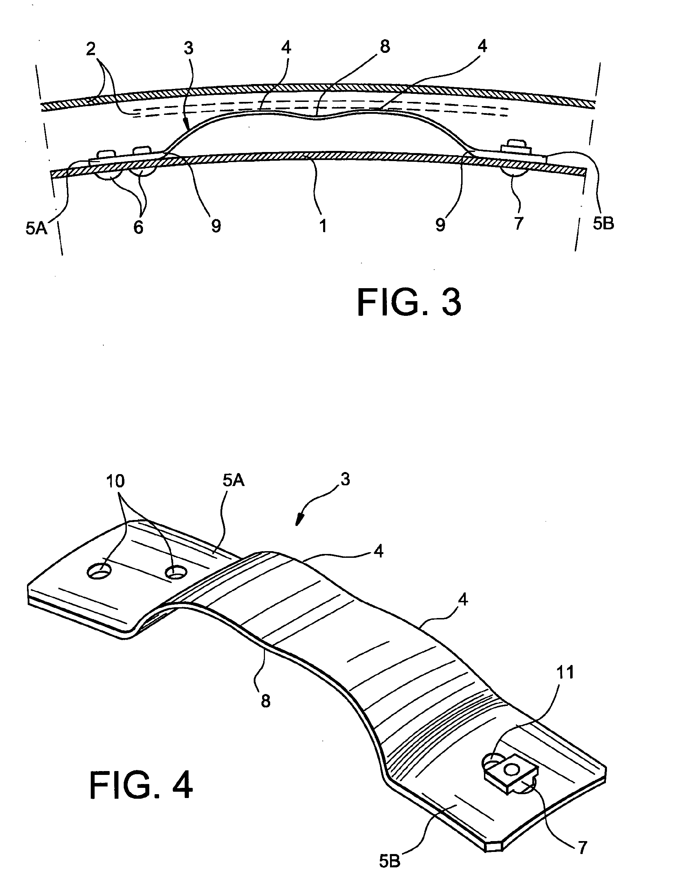

La figure 3 montre plus en détail la forme des pontets 3, notamment leur partie central cambrée 8 entourée de deux pattes 5A et 5B. Ces dernières sont en contact avec l'enveloppe de protection thermique 1.

La forme de la partie centrale cambrée 8 est donc caractérisée par deux zones sommitales 4 qui se prolongent vers les pattes 5A et 5B. Les deux zones sommitales 4 constituent chacune un point de contact privilégié avec l'enveloppe du canal de flux secondaire 2 (sur cette figure 3, la position de celui-ci a été représentée en traits fins interrompus). En d'autres termes, la partie centrale cambrée 8 présente une cambrure inversée par rapport à la courbure des zones sommitales 4. Cette géométrie à cambrure centrale inversée permet d'obtenir une capacité de flexion nettement augmentée de chaque pontet. En effet, les pontets selon les usages de l'art antérieur ne bénéficient que d'une souplesse très réduite sur les montants du pontet.

Une autre caractéristique complémentaire à la cambrure inversée de la partie centrale cambrée 8 est le faible rayon de courbure des jonctions 9 entre cette partie centrale cambrée 8 et les pattes 5A et 5B. De cette manière, on optimise la zone de flexion dans la partie centrale cambrée 8 du pontet. La flexion peut ainsi avoir lieu grâce à la cambrure inversée qui oriente la flexion en privilégiant une direction de déformation. Ceci permet en outre, l'utilisation de l'instabilité de la géométrie. Il est ainsi possible d'absorber une dilatation différentielle radiale entre deux pièces par la flexion tangentielle.

L'ensemble du pontet est en contact avec la chemise de protection thermique 1 par une fixation de la patte gauche 5A au moyen de rivet 6 et au moyen d'un pion de guidage 7 qui ménage un degré de liberté de la patte 5B, par rapport à la chemise de protection thermique 1. Ces détails sont mieux visibles à la figure 4 qui représente le pontet et ses deux pattes 5A et 5B.

La patte gauche 5A est munie de trous de fixation 10 pour être fixée de manière solidaire à la chemise de protection thermique 1. On précise à ce titre que le pontet est réalisé au départ d'une lame métallique relativement large. La patte droite 5B est munie d'une lumière 11 dont l'axe est parallèle à l'axe longitudinale de la lame constituant le pontet. Un pion de guidage 7 est fixé dans la chemise de protection thermique et à une forme de T. La tête du T dépasse au-dessus de la lumière 11, tandis que le pied du T est inséré à l'intérieur de celle-ci. De la sorte, le pontet peut subir des variations en longueur dans le sens longitudinal, dues à des différences importantes de température par rapport à celles subies par la chemise de protection thermique 1. En effet, le pion de guidage 7 peut se déplacer dans le sens longitudinal de la lumière 11 et permettre le mouvement relatif dans ce sens du pontet par la chemise de protection thermique. De plus, cette liaison à un degré de liberté, limite les contraintes dans le pontet.

Ainsi, le pontet joue son rôle d'amortisseur d'une manière optimisée et limite ainsi les risques d'endommagements de la chemise de protection thermique et de l'enveloppe du canal support de tuyère qui sont des pièces très nettement plus coûteuses que le pontet ainsi proposé. En effet, c'est ce dernier qui absorbe la quasi-totalité des déformations pendant le fonctionnement du turboréacteur. Il joue ainsi un rôle de fusible. On note également que la capacité en flambage de la chemise de protection thermique est augmentée par l'utilisation de tels pontets.

En référence de nouveau à la figure 1, on comprend que l'utilisation d'un grand nombre de pontets 3, répartis sur toute la circonférence d'une chemise de protection thermique 1 permet le positionnement relatif optimisé de cette dernière par rapport à l'enveloppe du canal support de tuyère.

## Revendications

1. Pontet de positionnement de deux pièces (1, 2) d'un turbopropulseur l'une par rapport à l'autre susceptibles de variations de leur position relative, constitué d'une lame métallique comportant principalement :
- deux pattes (5A, 5B) constituées chacune par une extrémité de la lame, pouvant être en contact sur une première (1) des deux pièces (1, 2) ; et
- une partie centrale cambrée (8) reliant les deux pattes (5A, 5B) ayant au moins une zone sommitale (4) de la partie centrale cambrée (8) et constituant ainsi au moins une zone pouvant être en contact avec la deuxième (2) des deux pièces,
- la partie centrale cambrée (8) présentant une cambrure centrale inversée définissant ainsi deux zones sommitales (4) constituant pendeant l'utilisation deux points de contact avec la deuxième (2) des deux pièces, **caractérisé en ce que**
- une seule des deux pattes (5A) est fixable sur la première pièce (1), l'autre patte (5B) étant configurée pour n'être qu'en contact avec cette première pièce (1) pour avoir un mouvement tangentiel relatif à la première pièce, et
- il comprend une lumière (11) dans la deuxième patte (5B) dans le sens longitudinal de la lame constituant le pontet.

2. Pontet de positionnement selon la revendication 1, **caractérisé en ce qu'**il peut recevoir un pion de guidage en T (7) solidaire de la première pièce (1) et dont le pied du T est placable dans la lumière (11).

3. Pontet de positionnement selon la revendication 1, **caractérisé en ce que** il comprend des parties de liaison (9) entre les pattes (5A, 5B) et la partie centrale cambrée (8) de faible rayon de courbure.

4. Dispositif de positionnement et d'adaptation aux dilatations différentielles entre la chemise de protection thermique (1) et l'enveloppe du canal support de tuyère (2) d'un turbopropulseur, **caractérisé en ce qu'**il comprend un certain nombre de pontets (3) selon l'une des revendications précédentes, pouvant être fixé sur l'enveloppe de protection thermique par la première des deux pattes (5A).

## Patentansprüche

1. Brücke zur Positionierung von zwei Teilen (1, 2) eines Turboprop-Triebwerks zueinander, die zu Änderungen ihrer Relativposition geeignet sind, bestehend aus einer Metallzunge, die hauptsächlich umfasst:
- zwei Laschen (5A, 5B), die jeweils durch ein Ende der Zunge gebildet sind, das an einem ersten (1) der beiden Teile (1, 2) in Kontakt sein kann; und
- ein die beiden Laschen (5A, 5B) verbindendes gebogenes Mittelteil (8), das wenigstens einen Scheitelbereich (4) des gebogenen Mittelteils (8) aufweist und somit wenigstens einen Bereich bildet, der mit dem zweiten (2) der beiden Teile in Kontakt sein kann,
- wobei das gebogene Mittelteil (8) eine umgekehrte mittlere Krümmung aufweist, wodurch zwei Scheitelbereiche (4) gebildet werden, die während der Verwendung zwei Kontaktstellen mit dem zweiten (2) der beiden Teile bilden,
**dadurch gekennzeichnet, dass**
- eine einzige der beiden Laschen (5A) an dem ersten Teil (1) fixierbar ist, wobei die andere Lasche (5B) dazu ausgebildet ist, mit diesem ersten Teil (1) nur in Kontakt zu sein, um eine tangentiale Relativbewegung zu dem ersten Teil zu haben, und
- sie ein Langloch (11) in der zweiten Lasche (5B) in Längsrichtung der die Brücke bildenden Zunge umfasst.

2. Positionierungsbrücke nach Anspruch 1, **dadurch gekennzeichnet, dass** sie einen T-förmigen Führungszapfen (7) aufnehmen kann, der mit dem ersten Teil (1) fest verbunden ist und von dem der Fuß des T in dem Langloch (11) platziert werden kann.

3. Positionierungsbrücke nach Anspruch 1, **dadurch gekennzeichnet, dass** sie Verbindungsteile (9) zwischen den Laschen (5A, 5B) und dem gebogenen Mittelteil (8) mit geringem Krümmungsradius umfasst.

4. Vorrichtung zur Positionierung und Anpassung an die unterschiedlichen Ausdehnungen zwischen dem Wärmeschutzmantel (1) und dem Mantel des Düsentragkanals (2) eines Turboprop-Triebwerks, **dadurch gekennzeichnet, dass** sie eine gewisse Anzahl an Brücken (3) nach einem der vorhergehenden Ansprüche umfasst, die durch die erste der beiden Laschen (5A) an dem Wärmeschutzmantel befestigt werden kann.

## Claims

1. Positioning bridge piece with two parts (1, 2) of a turboprop susceptible to variations in their relative positions with each other, constituted of a metallic bar principally comprising:
- two lugs (5A, 5B) each constituted by one end of the bar, being able to be in contact on a first (1) of the two parts (1, 2); and
- a cambered central part (8) linking the two lugs (5A, 5B) having at least one summit zone (4) of the cambered central part (8) and thus constituting at least one zone being able to be in contact with the second (2) of the two parts,
- the cambered central part (8) having an inversed central camber thus defining two summit zones (4) constituting during the using two contact points with the second (2) of the two parts,
**characterised in that**
- only one of the two lugs (5A) is fixable on the first part (1), the other lug (5B) being configured in order to be in contact only with this first part (1) so as to be able to move tangentially relative to the first part, and
- it comprises a slot (11) in the second lug (5B) in the longitudinal direction of the bar constituting the bridge piece.

2. Positioning bridge piece according to claim 1, **characterised in that** it can receive a T-shaped guide pin (7) integral with the first part (1) and whose T-shaped foot is able to be placed in the slot (11).

3. Positioning bridge piece according to claim 1, **characterised in that** it comprises linking parts (9) between the lugs (5A, 5B) and the cambered central part (8) of low radius of curvature.

4. Device for positioning and adapting to differential expansions between the heat shield liner (1) and the nozzle support pipe envelope (2) of a turboprop, **characterised in that** it comprises a certain number of bridge pieces (3) according to any one of the above claims, being able to be fixed on the heat shield envelope by the first of the two lugs (5A).
